# NEUE EUROPÄISCHE PATENTSCHRIFT

(11) **EP 0 485 842 B2**
(45) Veröffentlichungstag und Bekanntmachung des Hinweises auf die Entscheidung über den Einspruch: **30.12.1998**
(45) Hinweis auf die Patenterteilung: 27.09.1995
(21) Anmeldenummer: 91118736.7
(22) Anmeldetag: 04.11.1991
(51) Int. Cl.: E03C 1/042, F16L 5/00

(54) **Rosette für Unterputz-Wasserarmaturen**
Escutcheon for wall faucet batteries
Disque de recouvrement pour robinetteries murales

(30) Priorität: 12.11.1990 DE 4035911
(43) Veröffentlichungstag der Anmeldung: 20.05.1992
(73) Patentinhaber: FRIEDRICH GROHE AKTIENGESELLSCHAFT, D-58675 Hemer (DE)
(72) Erfinder: Humpert, Jürgen, W-5870 Hemer (DE)

(56) Entgegenhaltungen:
- WO-A-92/08071
- DE-A- 2 930 518
- DE-A- 3 132 857
- DE-A- 3 730 375
- DE-C- 2 940 860
- DE-C- 3 132 855
- DE-U- 8 009 457
- DE-U- 8 707 807
- FR-A- 2 352 112
- US-A- 4 960 628
- US-E- 27 655

## Beschreibung

Die Erfindung betrifft eine Rosette für Unterputz-Wasserarmaturen, welche aus einer Abdeckplatte mit einem axial vorstehenden Wulst und einer Zierplatte besteht und wenigstens einen Durchbruch für die Wasserarmatur aufweist und wobei die Zierplatte im vom Wulst umgebenen Zentralbereich der Abdeckplatte vorgesehen ist.

Ein derartiger Gegenstand ist aus dem deutschen Gebrauchsmuster Nr. 80 09 457 bekannt. Hierbei ist die Abdeckplatte aus Metallguß hergestellt und weist eine sichtseitige Vertiefung auf, in der eine Zierplatte aus Kunststoff angeordnet ist. Diese Rosetten werden in der Regel mit Schrauben an der Unterputz-Armatur befestigt, wobei die Schraubenköpfe im Bereich der Rosette sichtbar bleiben. Insbesondere bei farbbeschichteten Armaturen ist dies ungünstig, da bei der Schraubenmontage der Rosette an der Gebäudewand sehr leicht Beschädigungen der Farbschicht, insbesondere an den sichtbaren Schraubenköpfe auftreten können, was sehr nachteilig ist.

Der Erfindung liegt daher die Aufgabe zugrunde, die im Oberbegriff des Anspruchs 1 angegebene Rosette zu verbessern und so auszubilden, daß eine problemlose Anpassung und Befestigung an der Gebäudewand ermöglicht wird.

Diese Aufgabe wird erfindungsgemäß durch die Merkmale des Anpruchs 1 gelöst. Weitere Ausgestaltungen der Erfindung sind in den Ansprüchen 2 bis 5 angegeben.
Die mit der Erfindung erzielbaren Vorteile bestehen insbesondere darin, daß mit der Zierplatte die Befestigungsschrauben und nicht benötigte Öffnungen in der Abdeckplatte in hygienisch und ästhetisch ansprechender Weise problemlos nach der Anmontage auf der Baustelle abgedeckt werden können. Die Befestigung der Zierplatte an der Abdeckplatte erfolgt mit druckknopfartigen Zapfen die bei der Herstellung einstückig mit der Zierplatte im Kunstoffspritzverfhahren angegossen werden können. In weiterer Ausgestaltung der Erfindung kann, um beispielsweise bei einem zu flachen Einbau der Unterputz-Armatur ein Anliegen der Dichtung im Wulst der Rosette an der Gebäudewand zu ermöglichen, die Abdeckplatte mit einem ausbrechbaren Mittelteil versehen werden, so daß nach dem Ausbrechen des Mittelteils der verbleibenden Ringwulst mit der Dichtung einer zweiten Abdeckplatte vorgelagert werden kann.

Ausführungsbeispiele der Erfindung sind in der Zeichnung dargestellt und werden im folgenden näher erläutert. Es zeigt
- Figur 1: eine Abdeckplatte mit den aus der Gebäudewand vorragenden Wasserarmaturenteilen und einer in der Montagereihenfolge angeordneten Zierplatte in Perspektivansicht;
- Figur 2: die gemäß Figur 1 fertig installierte Unterputz-Wasserarmatur in Perspektivansicht;
- Figur 3: ein weiteres Ausführungsbeispiel der Rosette im Schnitt;
- Figur 4: ein anderes Ausführungsbeispiel einer Rosette mit einem vorgeschalteten Wulstring in Perspektivansicht;
- Figur 5: die Rosettenausbildung gemäß Figur 3 an einer fertig installierten Unterputz-Wasserarmatur in Perspektivansicht.

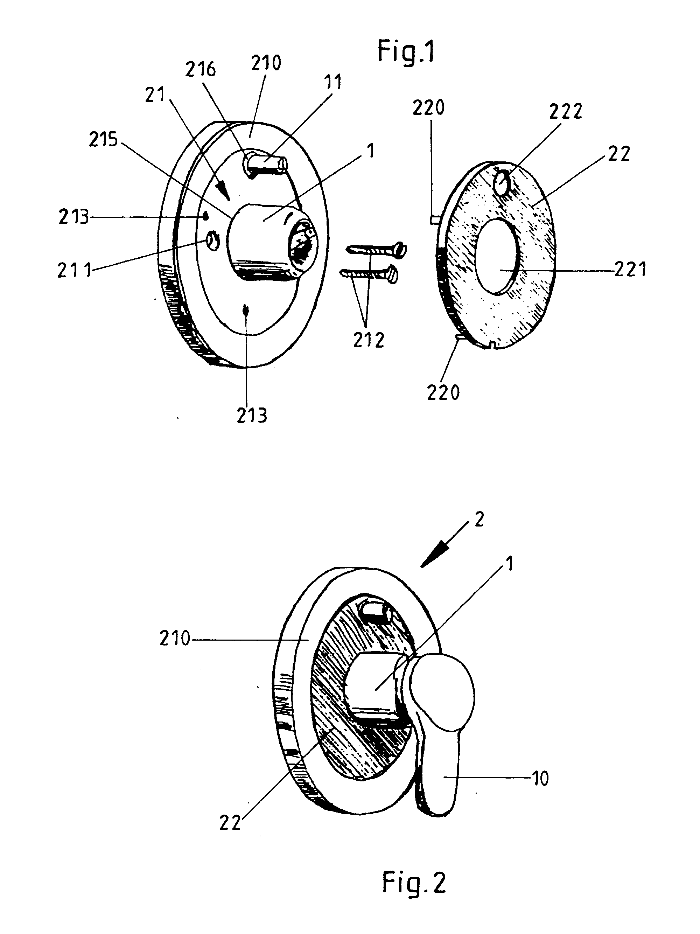

Der Einfachheit halber sind bei den Ausführungsbeispielen in der Zeichnung gleiche oder entsprechende Elemente jeweils mit gleichen Bezugszeichen versehen. Das in den Figuren 1 und 2 gezeigte Ausführungsbeispiel besteht aus einer in der Gebäudewand angeordneten Rohrleitungsinstallation mit einem mit Teilen aus der Gebäudewand vorstehenden Wasserarmatur 1 und einer aus einer Abdeckplatte 21 und einer Zierplatte 22 bestehenden Rosette 2. Die Abdeckplatte 21 weist dabei Durchbrüche 215 und 216 für die Durchführung des aus der Gebäudewand vorstehenden zylindrischen Teils der Wasserarmatur 1 und eines Umstellknopfes 11 auf. Die Abdeckplatte 21 hat darüber hinaus einen axial vorstehenden, umlaufenden Wulst 210, in dem an der wandseitigen Stirnseite eine Dichtung, z.B. ein Moosgummiring, zur dichten Anlage an der Gebäudewand vorgesehen ist. Die Abdeckplatte 21 wird mit Schrauben als Mittel zur Befestigung 212 an der an der Gebäudewand angeordneten Wasserarmatur 1 befestigt. Die Schrauben 212 werden hierbei durch die Bohrungen 211 in der Abdeckplatte 21 hindurchgeführt, so daß nach dem Eindrehen in die Wasserarmatur 1 und Festziehen der Wulst 210 mit der in der Zeichnung nicht dargestellten Dichtung gegen die Oberfläche der Gebäudewand verspannt wird. Zur Abdeckung der Befestigungsschrauben 212 und eventuell nicht benötigter Durchbrüche in der Abdeckplatte 21 ist die Zierplatte 22, ebenfalls mit Durchbrüchen 221,222 für die aus der Gebäudewand vorstehenden Teile der Wasserarmatur 1 versehen, in den vom Wulst 210 umgebenen Zentralbereich der Abdeckplatte 21 aufzuschieben. Die Halterung der Zierplatte 22 erfolgt dabei mit druckknopfartigen Zapfen 220, die an der aus Kunststoff hergestellten Zierplatte 22 mit angespritzt sind und die in Öffnungen 213 der Abdeckplatte 21 in der aufgeschobenen Position einfassen und die Zierplatte 22 in der Stecklage an der Abdeckplatte 21 verrasten. Hiernach kann ein Griffhebel 10, wie in Figur 2 dargestellt, auf dem vorragenden Teil der Wasserarmatur 1 befestigt werden, so daß nunmehr die Unterputz-Wasserarmatur betriebsbereit ist.

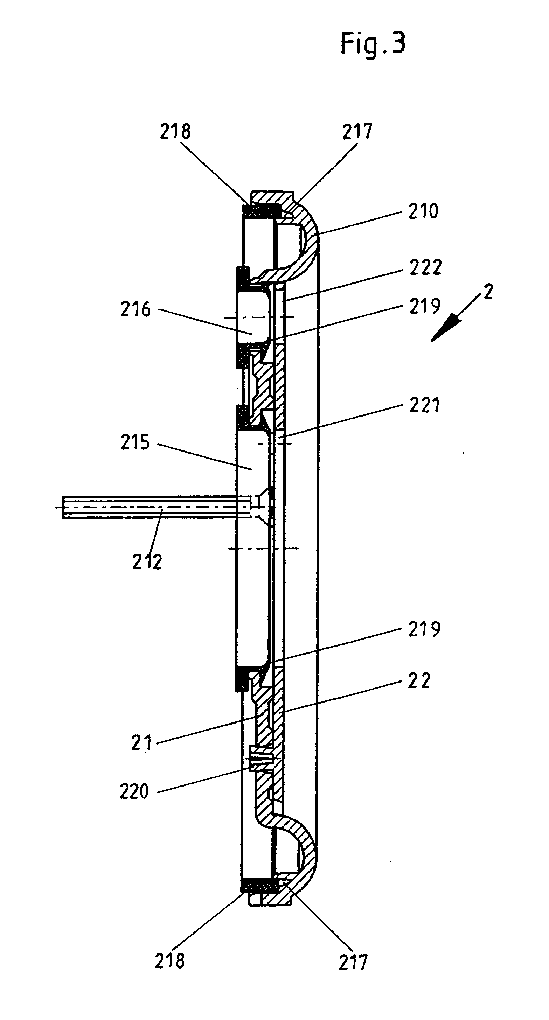

Bei dem in Figur 3 gezeigten Ausführungsbeispiel sind sowohl die Abdeckplatte 21 als auch die Zierplatte 22 aus Kunststoff hergestellt. Die Abdeckplatte 21 ist mit den Schrauben 212 so ausgelegt, daß bei der direkten Verschraubung mit der Wasserarmatur die auftretenden Materialspannungen in der Abdeckplatte 21 nur im unkritischen Bereich sowohl funktionell als auch optisch zur Wirkung kommen können.
Außerdem kann die Abdeckplatte 21 aus Kunststoff aufgrund des Herstellungsverfahrens optimal und kostengünstig für die Einbringung von Dichtungen ausgestaltet werden. In dem Wulst 210 ist eine Ringnut 217 für die Aufnahme der Dichtung 218 ausgebildet, mit der eine Abdichtung zur Gebäudewand hergestellt wird. An den Durchtrittsöffnungen 215,216 für die Wasserarmatur 1,11 sind ebenfalls Lippendichtungen 219 für den dichten Übergang vorgesehen.

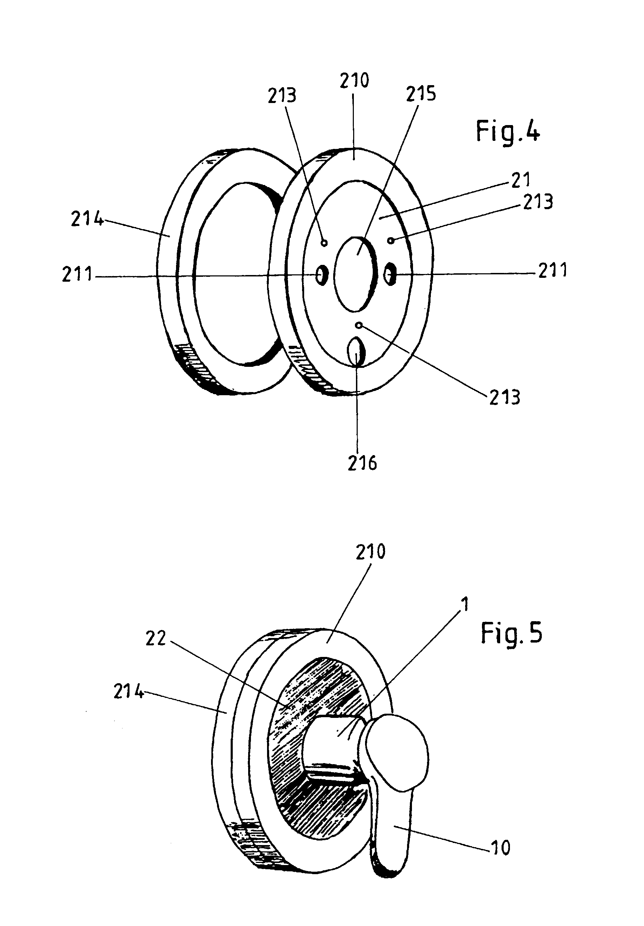

In den Figuren 4 und 5 ist ein anderes Ausführungsbeispiel der Erfindung dargestellt, wobei ein Umstellknopf 11 an der Wasserarmatur 1 nicht ausgebildet ist. Darüber hinaus ist bei dieser Ausführung die Wasserarmatur 1 zu flach in der Gebäudewand installiert, so daß die Rosette 2 gemäß dem vorstehenden Ausführungsbeispiel mit der Dichtung nicht an der Gebäudewand zur Anlage gelangt. Die Abdeckplatte 21 ist hierbei mit einem ausbrechbaren Zentralbereich versehen und vorzugsweise aus Kunststoff hergestellt. Zur Überbrükkung der zu großen Vorkraglänge der in der Gebäudewand angeordneten Wasserarmatur 1 sind somit zwei Abdeckplatten 21 hintereinander angeordnet, wobei die an der Gebäudewand anliegende Abdeckplatte 21 im Zentralbereich ausgebrochen ist, so daß sie lediglich aus einem Ringwulst 214 mit einer Dichtung besteht. Nach dem Aufschieben des Ringwulstes 214 und die äußere Abdeckplatte 21 erfolgt wiederum mit den Schrauben 212 die Verpressung zur Gebäudewand, so daß nunmehr ein dichter Übergang zwischen Gebäudewand und Wasserarmatur 1 hergestellt ist. Hiernach kann in gleicher Weise die Zierplatte 22 und der Griffhebel 10 montiert werden. Die Zierplatte 22 weist hierbei jedoch keinen Durchbruch 222 auf, da ein Umstellbetätigungsknopf nicht vorgesehen ist.

Die beiden Teile, nämlich Abdeckplatte 21 und Zierplatte 22, der Rosette 2 werden zweckmäßig aus Kunststoff im Spritzgußverfahren hergestellt. Selbstverständlich können aber auch andere Materialien, insbesondere Metalle, eingesetzt werden. Die Rosettenausbildung ist besonders für Farbbeschichtungen, z.B. Pulverlackierungen, geeignet.

## Patentansprüche

1. Rosette für Unterputz-wasserarmaturen (1), welche aus einer Abdeckplatte (21) mit einem axial vorstehenden Wulst (210) und einer Zierplatte (22) besteht und wenigstens einen Durchbruch (215,216) für die Wasserarmatur (1) aufweist und wobei die Zierplatte (22) im vom Wulst (210) umgebenen Zentralbereich der Abdeckplatte (21) vorgesehen ist, dadurch gekennzeichnet, daß die Rosette (2) im montierten Zustand an der Wasserarmatur (1) mit Schrauben (212) befestigt ist, daß die Schrauben (212) der Rosette (2) an der Abdeckplatte (21) angeordnet sind und die Zierplatte (22) mit druckknopfartigen Zapfen (220) als Haft- oder Rastmittel lösbar auf der Abdeckplatte (21) befestigt ist, wobei die Zierplatte (22) die Schrauben (212) der Abdeckplatte (21) verdeckt.

2. Rosette nach Anspruch 1, dadurch gekennzeichnet, daß eine Dichtung (218) in dem vorstehenden Wulst (210) angeordnet ist.

3. Rosette nach einem der Ansprüche 1 oder 2, dadurch gekennzeichnet, daß dem Wulst (210) an der Abdeckplatte (21) an der Dichtungsseite ein oder mehrere Ringwülste (214) mit zugehöriger Dichtung (218) vorlagerbar sind, derart, daß auch bei einem zu flachen Einbau der Wasserarmatur (1) eine dichte Abdeckung an der Gebäudewand ermöglicht ist.

4. Rosette nach einem der Ansprüche 1 bis 3, dadurch gekennzeichnet, daß die Abdeckplatte (21) vorzugsweise aus Kunststoff hergestellt und der zentrale Teil ausbrechbar ausgebildet ist, so daß bei Bedarf die Abdeckplatte (21) zu einem Ringwulst (214) umgestaltet werden kann.

5. Rosette nach einem der Ansprüche 1 bis 4, dadurch gekennzeichnet, daß im Bereich der Austrittsöffnungen (215,216) der Abdeckplatte (21) Lippendichtungen (219) vorgesehen sind.

## Claims

1. Rosette for concealed water fittings (1), which consists of a cover plate (21) having an axially protruding bead (210) and of a decorative plate (22) and has at least one opening (215, 216) for the water fitting (1), the decorative plate (22) being provided in the central region of the cover plate (21), which central region is surrounded by the bead (210), characterised in that the rosette (2) in the mounted state is fastened to the water fitting (1) by screws (212), the screws (212) of the rosette (2) are arranged on the cover plate (21) and the decorative plate (22) is detachably fastened to the cover plate (21) by push-button-like pegs (220) constituting adhesive or snap-on means, the decorative plate (22) concealing the screws (212) of the cover plate (21).

2. Rosette according to claim 1, characterised in that sealing means (218) are arranged in the protruding bead (210).

3. Rosette according to either claim 1 or claim 2, characterised in that one or more annular beads (214) having associated sealing means (218) can be mounted prior to the bead (210) on the cover plate (21) on the seal side in such a manner that even when the water fitting (1) has been installed too shallowly it is possible to provide a water-tight covering against the building wall.

4. Rosette according to any one of claims 1 to 3, characterised in that the cover plate (21) is manufactured preferably from plastics and the central portion is so constructed that it can be broken out so that the cover plate (21) can be converted into an annular bead (214) if required.

5. Rosette according to any one of claims 1 to 4, characterised in that lip seals (219) are provided in the region of the outlet openings (215, 216) of the cover plate (21).

## Revendications

1. Rosette pour robinet encastré (1), composée d'une plaque de recouvrement (21) ayant un bourrelet (210) axialement en saillie et d'une plaque décorative (22), et présentant au moins un passage (215, 216) pour le robinet (1), la plaque décorative (22) étant prévue dans la zone centrale de la plaque de recouvrement (21) à l'intérieur du bourrelet (210),
caractérisée en ce qu'
• à l'état monté, la rosette (2) est fixée au robinet (1) par des vis (212),
• les vis (212) de la rosette (2) sont disposées sur la plaque de recouvrement (21) et la plaque décorative (22) est fixée de manière amovible sur la plaque de recouvrement (21) par des tétons (220) du type boutons-pression en tant que moyens d'accrochage ou de fixation, la plaque décorative (22) cachant les vis (212) de la plaque de recouvrement (21).

2. Rosette selon la revendication 1,
caractérisée en ce qu'
un joint d'étanchéité (218) est placé dans le bourrelet en saillie (210).

3. Rosette selon l'une des revendications 1 ou 2,
caractérisée en ce que
le bourrelet (210) est précédé au niveau de la plaque de recouvrement (21), du côté de l'étanchéité, par un ou plusieurs bourrelets annulaires (214) avec des joints correspondants, de façon à permettre un recouvrement étanche avec le mur, même en cas de montage trop plat du robinet (1).

4. Rosette selon l'une des revendications 1 à 3,
caractérisée en ce que
la plaque de recouvrement (21) est réalisée de préférence en matière plastique et la partie centrale peut se casser pour s'enlever de façon que, le cas échéant, la plaque de recouvrement (21) puisse être transformée en un bourrelet annulaire (214).

5. Rosette selon l'une des revendications 1 à 4,
caractérisée en ce qu'
au niveau des orifices de sortie (215, 216) de la plaque de recouvrement (21) se trouvent des joints d'étanchéité en forme de lèvres (219)
